# EUROPEAN PATENT APPLICATION

(11) **EP 4 145 029 A1**
(43) Date of publication of application: **08.03.2023**
(21) Application number: 22193937.4
(22) Date of filing: 05.09.2022
(51) Int. Cl.: F16K 25/00, F16K 5/06, F16K 1/18

(54) **FREEZE RESISTANCE VALVE**

(30) Priority: 03.09.2021 IN 202111040091
(71) Applicant: Goodrich Corporation, Charlotte, NC 28217-4578 (US)
(72) Inventor: BAMBILA, Gururaja, Bangalore (IN); SELVARAJ, Sugumaran, Bangalore (IN)
(74) Representative: Dehns

(57) **Abstract**

A valve includes a valve body (220) having an input port (222) and an outlet port (224). The valve body defines a fluid passageway (226) extending between input port and an outlet port. The valve also includes a valve element (206) disposed in the fluid passageway that controls a flow a fluid through the valve body from the input port to the outlet port. One or more of the fluid passageway and the valve control element is coated with a phobic coating.

## Description

### CROSS-REFERENCE TO RELATED APPLICATIONS

This application claims priority to Indian Patent Application No. 202111040091 filed September 3, 2021.

### BACKGROUND

Exemplary embodiments pertain to the art of valves and, in particular, to valves that are resistant to freezing.

Vehicles such as aircraft deliver fluids around the vehicle for various purposes. For example, in an aircraft, potable water systems (PWS), vacuum water systems (VWS), fuel systems, de-icing systems, etc. can include means for delivering fluids.

Such systems typically include valves to control the flow of the fluid. Most of the valves are motor driven. In some cases, the valves have to operate with fluids that can freeze (for example, when the ambient drops below 0°C). Such valves typically, thus, includes additional heating device to keep them warm (just above freezing). This is necessary for proper function and avoid any blockage. The valves are also designed to operate at low to high pressure.

Examples of heating methods include providing a silicone heater jacket, cartridge heater etc. Having heater installed along with valve is obviously requires additional power, adds weight, and increases the number of components in the system.

### BRIEF DESCRIPTION

Disclosed is a valve comprising a valve body having an input port and an outlet port. The valve body defines a fluid passageway extending between input port and an outlet port and also includes a valve element disposed in the fluid passageway that controls a flow a fluid through the valve body from the input port to the outlet port. One or more of the fluid passageway and the valve control element is coated with a phobic coating.

In any prior embodiment the coating is one of: a hydro-phobic coating, an omni-phobic, and a super hydro-phobic coating.

In any prior embodiment the coating is applied by microspray or ultrasonic spray.

In any prior embodiment, the coating is applied by dip application or plasma polymerization.

In any prior embodiment the coating is formed of Silica nanoparticles, or Ceramic nano particles.

In any prior embodiment the coating is a Fluoropolymer based coating or a monomer based coating.

In any prior embodiment, the valve can include a controller to control the valve element

In any prior embodiment the valve elment is a ball or a flapper.

Also disclosed is a method of forming a valve. The method includes: receiving or creating a valve body having an input port and an outlet port, wherein the valve body defines a fluid passageway extending between input port and an outlet port and has a valve element disposed in the fluid passageway that controls a flow a fluid through the valve body from the input port to the outlet port; and coating one or more of the fluid passageway and the valve control element with a phobic coating.

In any prior method the coating is one of: a hydro-phobic coating, an omni-phobic, and a super hydro-phobic coating.

In any prior method coating includes applying the coating by microspray or ultrasonic spray, applying the coating by dip application or plasma polymerization.

In any prior method the coating is formed of Silica nanoparticles, Ceramic nano particles or is a Fluoropolymer based coating or a monomer based coating.

### BRIEF DESCRIPTION OF THE DRAWINGS

The following descriptions should not be considered limiting in any way. With reference to the accompanying drawings, like elements are numbered alike:
FIG. 1 is an example of a valve according to the prior art; and
FIG. 2 is an example of a valve according to an embodiment.

### DETAILED DESCRIPTION

A detailed description of one or more embodiments of the disclosed apparatus and method are presented herein by way of exemplification and not limitation with reference to the Figures.

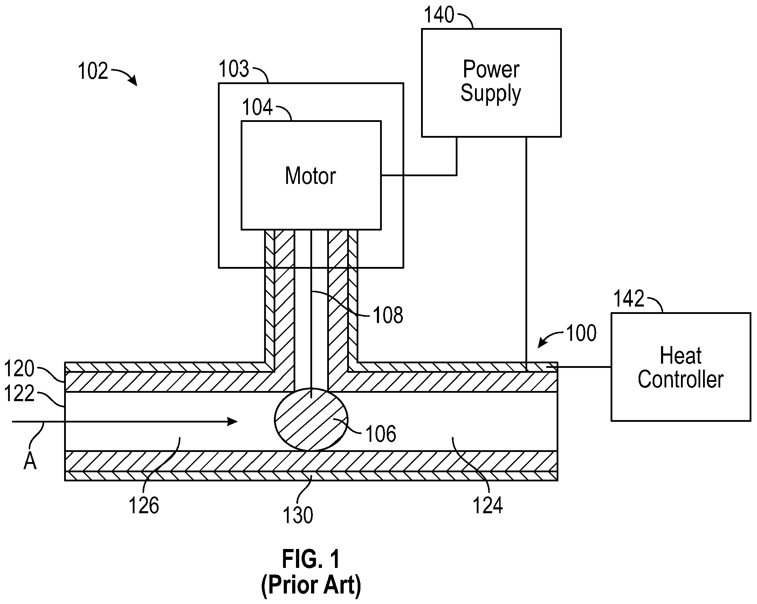

FIG. 1 shows an example of prior art solution that provides controllable valve 100 with heating. The valve 100 is part of valve assembly 100 that includes the valve 100 and a valve controller 103 that includes a motor 104. The illustrated valve 100 is a ball valve as are the other valves shown herein. In operation, the motor 104 is connected to a valve element 106 by a control element 108. The motor 104 can cause the control element 108 to move to control the flow through the valve 100 in the direction indicated by arrow A. In the case of a ball valve the valve element 106 is a ball.

In the event that the valve 100 is ball valve, the illustrated valve 100 includes a valve body 120 having an input port 122 and an outlet port 124, a fluid passageway 126 extending between these ports and a ball (element 106), having a through port therein, which is arranged in the fluid passageway 126. Rotation of the ball 106 controls alignment of the through port with the fluid passageway 126 and therefore the position of the ball can be used to control the flow of fluid through the valve.

It shall be appreciated, however, that the teachings herein are not limited to ball valves and can be applied to any type of valve. For example, the valve 100 could be butterfly valve. IN such a case, the element 106 is a disk-shaped rotary flapper sized to the passage 126. The flapper 106 is able to rotate around a central axis (e.g., around along control element 108) between presenting a flat face of the disk to the flow direction A, thereby preventing fluid flow, and presenting an edge to the flow direction A, thereby substantially allowing fluid flow through the passage 126. The disk can also be rotated to any position between the two in order to partially throttle flow through the passage.

Regardless, to reduce the risk of fluid freezing a heater 130 is provided on the external portion of the body 120. The heater 130 heats the body 120 and keeps the fluid in the passageway 126 from freezing. Such a heater is connected to power supply 140 and can include a heater controller 142. The heater 130 can increase power draw and increase complexity in both connections as well as requiring a controller which also can increase weight. Having the heater can also create Additional thickness build up on the valve and provide another point of failure for the valve.

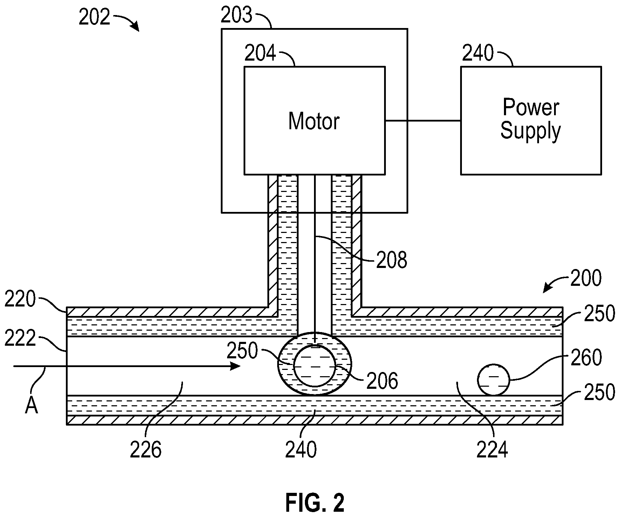

FIG. 2 shows an example of a valve 200 according to one embodiment. The valve 200 can be any type of a valve such a ball valve or butterfly as described above. Further, the teachings are not limited to such types of valve and can be employed on any valve either now know or later developed.

The valve 200 is part of valve assembly 202 that includes the valve 200 and a valve controller 203 that includes a motor 204. The illustrated valve 200 is a ball valve but that is not limited and can be any type of valve. In operation, the motor 204 is connected to a valve element 206 by a control element 208. The motor 204 can cause the control element 208 to move to control the flow through the valve 200 in the direction indicated by arrow A. In the case of a ball valve the valve element 206 is a ball.

In the event that the valve 200 is ball valve, the illustrated valve 200 includes a valve body 220 having an input port 222 and an outlet port 224, a fluid passageway 226 extending between these ports and a ball (element 206), having a through port therein, which is arranged in the fluid passageway 226. Rotation of the ball 206 controls alignment of the through port with the fluid passageway 226 and therefore the position of the ball can be used to control the flow of fluid through the valve.

It shall be appreciated, however, that the teachings herein are not limited to ball valves and can be applied to any type of valve. For example, the valve 200 could be butterfly valve. In such a case, the element 206 is a disk-shaped rotary flapper sized to the passage 126 operates as discussed above.

Regardless, of the type of valve, portions of the fluid passageway 226 and the control element 206 are coated with a phobic coating 250. The phobic coating 250 can prevent the water or any fluid to stay on the surfaces of the fluid passagway 226 or the control element 206 coated with the coating. Such a coating also helps the fluid to maintain very minimal contact (as shown in FIG. 2) with the surface it coats. Presently there are different types of phobic coating available and include hydro-phobic, Omni-phobic, Super hydro-Phobic coatings.

Herein, a phobic coating is any coating that make the coated surfaces (e.g., fluid passageway 226 and contorl element 206) resist contact with the fluid such as fluid 260). Examples of specific coatings can include but are not lmited to coatings formed of Silica Nano particles, Ceramic nano particles, Fluoropolymer based coatings and Monomer based coatings.

The coating can be applied by Micro Spray, Ultrasonic spray, dip coating or Plasma polymerization to name but a few.

As such, with minimal force (gravity flow or minor pressure line) the fluid can be forced out from the surface. This is especially helpful when the fluid use to stagnate in the valve when valve move to closed position from open position. In uncoated surface, this stagnate fluid can freeze when the valve is get exposed to low temperature as cold temperature conducted through the wall of the valve body to fluid which has large contact with valve inner surface. This can be eliminated or reduced by applying the phobic coating 250 as disclosed herien as the contact between the surface and fluid 260 is reduced which is not only helps to make fluid not stay on surface (results stagnate water) but reduces the contact with surface there by less heat transfer (cold or hot).

In one embodiment, the additional heater is not required as the valve itself will be resistive to freezing. This will reduce additional components and overall weight of the assembly. This may also benefit in terms of cost as well. Of course, it may be deisred to also add a heater to the valve of FIG. 2 as is shown in FIG. 1.

Embodiments herein can provide one or more of the following benefits: No heater required; Less weight and reduce the assembly weight depending the number on the valves being used in system; Low cost (compared to heater with controller); Compatible with many types of fluid; Improved life and No/low maintenance; No deicing cost for heater to thermal requirement; Low wetness surface and reduced pressure loss.

The term "about" is intended to include the degree of error associated with measurement of the particular quantity based upon the equipment available at the time of filing the application.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made and equivalents may be substituted for elements thereof without departing from the scope of the invention as defined by the claims. In addition, many modifications may be made to adapt a particular situation or material to the teachings of the present disclosure without departing from the scope of the claims. Therefore, it is intended that the present disclosure not be limited to the particular embodiment disclosed as the best mode contemplated for carrying out this present disclosure, but that the present disclosure will include all embodiments falling within the scope of the claims.

## Claims

1. A valve comprising:
a valve body (220) having an input port (222) and an outlet port (224),
wherein the valve body defines a fluid passageway (226) extending between input port and an outlet port;
a valve element (206) disposed in the fluid passageway that controls a flow a fluid through the valve body from the input port to the outlet port;
wherein one or more of the fluid passageway and the valve control element is coated with a phobic coating (250).

2. The valve of claim 1, wherein the coating is one of: a hydro-phobic coating, an omni-phobic, and a super hydro-phobic coating.

3. The valve of claim 2, wherein the coating is applied by microspray or ultrasonic spray.

4. The valve of claim 2, wherein the coating is applied by dip application or plasma polymerization.

5. The valve of claim 1, wherein the coating is applied by microspray, ultrasonic spray, dip application or plasma polymerization.

6. The valve of claim 1, wherien the coating is formed of Silica nanoparticles, or Ceramic nano particles.

7. The valve of claim 1, wherien the coating is a Fluoropolymer based coating or a monomer based coating.

8. The valve of any preceding claim, further comprising: a controller to control the valve element.

9. The valve of claim 8, wherein the valve elment is a ball or a flapper.

10. A method of forming a valve comprising:
receiving or creating a valve body (220) having an input port (222) and an outlet port (224), wherein the valve body defines a fluid passageway (226) extending between input port and an outlet port and has a valve element (206) disposed in the fluid passageway that controls a flow a fluid through the valve body from the input port to the outlet port; and
coating one or more of the fluid passageway and the valve control element with a phobic coating (250).

11. The method of claim 10, wherein the coating is one of: a hydro-phobic coating, an omni-phobic, and a super hydro-phobic coating.

12. The method of claim 11, wherein coating includes applying the coating by microspray or ultrasonic spray.

13. The method of claim 11, wherein coating includes applying the coating by dip application or plasma polymerization.

14. The method of claim 10, wherein coating includes applying the coating by microspray, ultrasonic spray, dip application or plasma polymerization.

15. The method of claim 10, wherien the coating is formed of Silica nanoparticles, or Ceramic nano particles, or wherien the coating is a Fluoropolymer based coating or a monomer based coating.
